# EUROPEAN PATENT APPLICATION

(11) **EP 4 484 505 A1**
(43) Date of publication of application: **01.01.2025**
(21) Application number: 23807939.6
(22) Date of filing: 19.05.2023
(51) Int. Cl.: C09D 5/16, C09D 183/04

(54) **PRODUCT HAVING ANTI-FOULING SURFACE, AND METHOD FOR FORMING ANTI-FOULING SURFACE**

(30) Priority: 19.05.2022 KR 20220061622
(71) Applicant: LG Chem, Ltd., Yeongdeungpo-gu Seoul 07336 (KR)
(72) Inventor: SEO, Kwangseok, Daejeon 34122 (KR); PARK, Hee Kwan, Daejeon 34122 (KR); CHI, Hanna, Daejeon 34122 (KR); CHOI, Hee Jung, Daejeon 34122 (KR); CHO, Hyun Jung, Daejeon 34122 (KR)
(74) Representative: Goddar, Heinz J.
(86) International application number: PCT/KR2023/006818
(87) International publication number: WO 2023/224420

(57) **Abstract**

The present disclosure relates to an article having an anti-contamination surface and a method for forming an anti-contamination surface on the surface of an article.

## Description

### [TECHNICAL FIELD]

### CROSS-REFERENCE TO RELATED APPLICATION(S)

This application claims priority benefit of Korean Patent Application No. 10-2022-0061622 filed on May 19, 2022 in the Korean Intellectual Property Office, the disclosure of which is incorporated herein by reference in its entirety.

The present disclosure relates to an article having an anti-contamination surface and a method for forming an anti-contamination surface on the surface of an article.

### [BACKGROUND OF ART]

Anti-contamination coatings are used industrially to prevent adhesion of foreign substances or adsorption of contaminants to a specific surface.

Specifically, for example, the surfaces of display panels, camera lenses, infrared sensors, visible light sensors, camera sensors, radars, lidars, etc. are subject to contamination from time to time by human fingerprints, dust, or external stains, even under normal use environments.

If contamination occurs on the surface of such a device, it may block the user's vision or cause the device to malfunction. In particular, various sensors and radars are used in autonomous driving devices that have recently been in the spotlight. If contamination occurs on the surface of these devices, errors may occur in data interpretation due to the contamination, which can greatly threaten the safety of autonomous driving users and people around them.

Therefore, it is necessary to prevent contaminants from attaching to the surface of such devices and keep the surface of the devices clean.

However, contaminants are easily attached to general glass or polymer resin used as the surface substrate of such devices due to their nature. Accordingly, periodic cleaning is required, and a separate power source or device is required for this. Further, even if cleaning and drying are performed, there is a problem in that additional surface stains may occur.

In addition, in the case of super-water-repellent coatings or super-oil-repellent coatings to prevent contaminants from attaching, surface irregularities exist, but the durability of these surface irregularities is not high, so there is a problem in that the effect does not last long.

Accordingly, research is needed on anti-contamination surfaces that can prevent contaminants from attaching to the device surface.

### [DETAILED DESCRIPTION OF THE INVENTION]

### [Technical Problem]

The present disclosure relates to an article having an anti-contamination surface and a method for forming an anti-contamination surface on the surface of an article.

### [Technical Solution]

In the present disclosure, there is provided an article having an anti-contamination surface, including a substrate; a first region present on a portion of a surface of the substrate and having a lubricating layer formed thereon; and a second region present on at least a portion of a surface of the substrate other than the first region and having an anti-adhesion coating layer formed thereon.

According to an embodiment of the present disclosure, a surface energy of the second region may be greater than a surface energy of the first region.

Specifically, the lubricating layer may have a surface energy of less than about 20 mJ/m².

Further, the anti-adhesion coating layer may have a surface energy of about 20 mJ/m² or more.

In addition, the anti-adhesion coating layer may have a surface energy of about 40 mJ/m² or less.

According to another embodiment of the present disclosure, the second region may be formed to surround the first region.

Further, the first region may be formed in a convex or concave shape.

According to an embodiment of the present disclosure, the lubricating layer may have a thickness of about 0.1 to 200 µm, 0.1 µm or more, about 0.5 µm or more, about 1 µm or more, about 200 µm or less, about 150 µm or less, or about 100 µm or less.

In addition, the lubricating layer may include a hydrophobic inorganic cured layer, a fluorine-silane cured layer formed on the hydrophobic inorganic cured layer, and a fluorine oil layer formed on the fluorine-silane cured layer.

According to an embodiment of the present disclosure, the hydrophobic inorganic cured layer may include a cured product of alkyl-trialkoxy silane and tetraalkoxy silane.

Further, the hydrophobic inorganic cured layer may have a thickness of about 0.05 to 20 µm, about 0.05 µm or more, or about 0.1 µm or more, and about 20 µm or less, about 15 µm or less, or about 10 µm or less.

According to another embodiment of the present disclosure, the fluorine-silane cured layer may include a cured product of fluoropolyether silane.

In addition, the fluorine oil layer may include a fluorinated polyether oil.

In addition, a sum of the thicknesses of the fluorine-silane cured layer and the fluorine oil layer may be about 0.1 to 200 µm, about 0.1 µm or more, about 0.5 µm or more, about 1 µm or more, about 200 µm or less, about 150 µm or less, or about 100 µm or less.

Further, the anti-adhesion coating layer may include cured polydialkylsiloxane and a silicone oil.

Further, the silicone oil may have a viscosity of 1000 cSt or less.

Meanwhile, in the present disclosure, there is provided a method for forming an anti-contamination surface, including the steps of: forming a first region including a hydrophobic inorganic cured layer on a portion of a surface of a substrate; forming a second region including an anti-adhesion coating layer on at least a portion of the surface of the substrate other than the first region; and forming a lubricating layer in the first region.

The terminology used herein is for the purpose of describing particular embodiments only and is not intended to be limiting of the invention.

The singular forms are intended to include the plural forms as well, unless the context clearly indicates otherwise.

It will be further understood that the terms "include", "comprise", or "have" when used in this disclosure, specify the presence of stated features, numbers, steps, components, or combinations thereof, but do not preclude the presence or addition of one or more other features, numbers, steps, components, or combinations thereof.

Also, as used herein, when a layer or an element is mentioned to be formed "on" layers or elements, the layer or element may be directly formed on the layers or elements, or other layers or elements may be additionally formed between the layers, on a subject, or on a substrate.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present invention will be described in detail.

According to one aspect of the present disclosure, there is provided an article having an anti-contamination surface including a substrate; a first region present on a portion of a surface of the substrate and having a lubricating layer formed thereon; and a second region present on at least a portion of a surface of the substrate other than the first region and having an anti-adhesion coating layer formed thereon.

The present inventors have discovered that when contaminants adhere to the surface of an article including both a first region where a lubricating layer is formed on the surface of the substrate and a second region where an anti-adhesion coating layer is formed, the contaminants move from the first region to the second region, and fall off from the surface of the anti-adhesion coating layer in the second region, so that the contaminants do not adhere to the surface of the article, thereby completing the present invention.

First, in an article having an anti-contamination surface according to one aspect of the present disclosure, the term "substrate" may refer to a substrate that constitutes the surface of the article itself, or may mean a substrate applied separately to implement the anti-contamination surface on the surface of a general article.

In addition, on the surface of the substrate, there are a first region where a lubricating layer is formed and a second region where an anti-adhesion coating layer is formed. On the surface of the substrate, the first region and the second region may be present separately, and do not overlap each other.

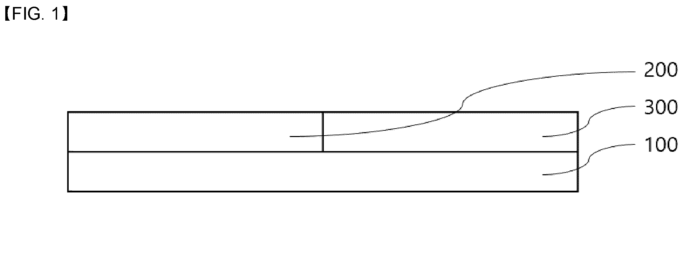

FIG. 1 is an image schematically showing a cross-section of an anti-contamination surface in an article provided with an anti-contamination surface according to an embodiment of the present disclosure.

### [FIG. 1]

Referring to FIG. 1, in the article having an anti-contamination surface according to an embodiment of the present disclosure, the anti-contamination surface includes a substrate (100); a first region (200) present on a portion of a surface of the substrate and having a lubricating layer formed thereon; and a second region (300) present on at least a portion of a surface of the substrate other than the first region and having an anti-adhesion coating layer formed thereon.

According to an embodiment of the present disclosure, a surface energy of the second region may be greater than a surface energy of the first region.

That is, the first region is a region where a lubricating layer is formed, and its surface energy may have a relatively small value. In addition, the second region is a region where an anti-adhesion coating layer is formed, and its surface energy may have a relatively large value.

Conversely, among the first and second distinct regions on the surface of the article according to an embodiment of the present disclosure, the region having a relatively low surface energy may be referred to as the first region where the lubricating layer is formed. Among the first and second distinct regions on the surface of the article according to an embodiment of the present disclosure, the region having a relatively high surface energy may be referred to as the second region where the anti-adhesion coating layer is formed.

When contamination occurs on the anti-contamination surface, the attached contaminants, due to the difference in surface energy, are pushed out from a region with a relatively low surface energy, i.e., the first region where a lubricating layer is formed, to a region with a relatively high surface energy, i.e., the second region where an anti-adhesion coating layer is formed.

Specifically, when contamination occurs on the anti-contamination surface, due to the difference in surface energy between the first region and the second region, a difference between the first interfacial tension and the second interfacial tension occurs, wherein the first interfacial tension is generated at the interface between the contaminant and the first region surface and the second interfacial tension is generated at the interface between the contaminant and the second region surface.

That is, since the first interfacial tension is greater than the second interfacial tension, some contaminants over the first region relatively gather at the center of the contaminants, and some contaminants over the second region spread relatively outward, causing the center of the contaminants to gradually move toward the second region.

In addition, the contaminants pushed out to the second region are directly desorbed and removed from the surface of the article due to the anti-adhesion coating layer.

With this process, an anti-contamination surface can be implemented, and an article provided with such an anti-contamination surface can effectively prevent its surface from being contaminated by external contamination sources.

In other words, the above-described effect occurs due to the difference in surface tension acting on the interface between the lubricating layer and the contaminants, and the interface between the anti-adhesion coating layer and the contaminants, when the contaminants are in contact with both the interfaces of the lubricating layer and the anti-adhesion coating layer.

When the lubricating layer or the anti-adhesion coating layer is used alone, it is difficult to obtain the above-mentioned effect, because spontaneous movement of contaminants due to the difference in surface tension does not occur on the layer.

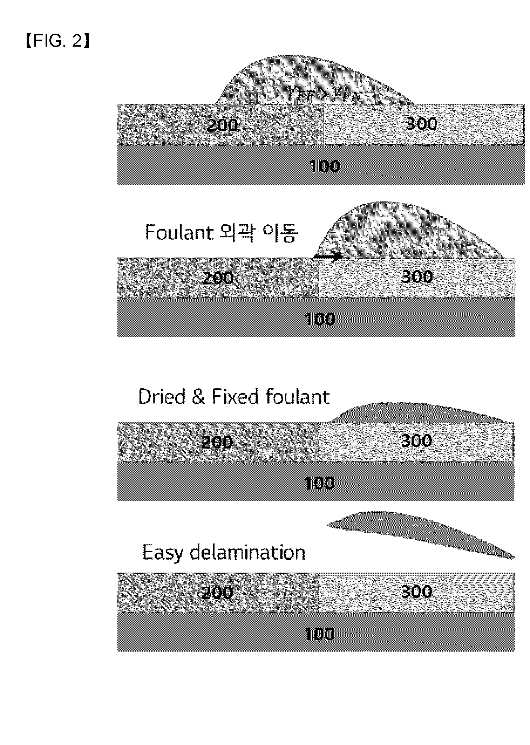

FIG. 2 is a diagram schematically showing the effect achieved by an embodiment of the present disclosure.

Referring to FIG. 2, it can be confirmed that contaminants attached to the surface move toward the anti-adhesion coating layer due to the difference in surface energy at the interfaces of the lubricating layer and the anti-adhesion coating layer, and then fall off.

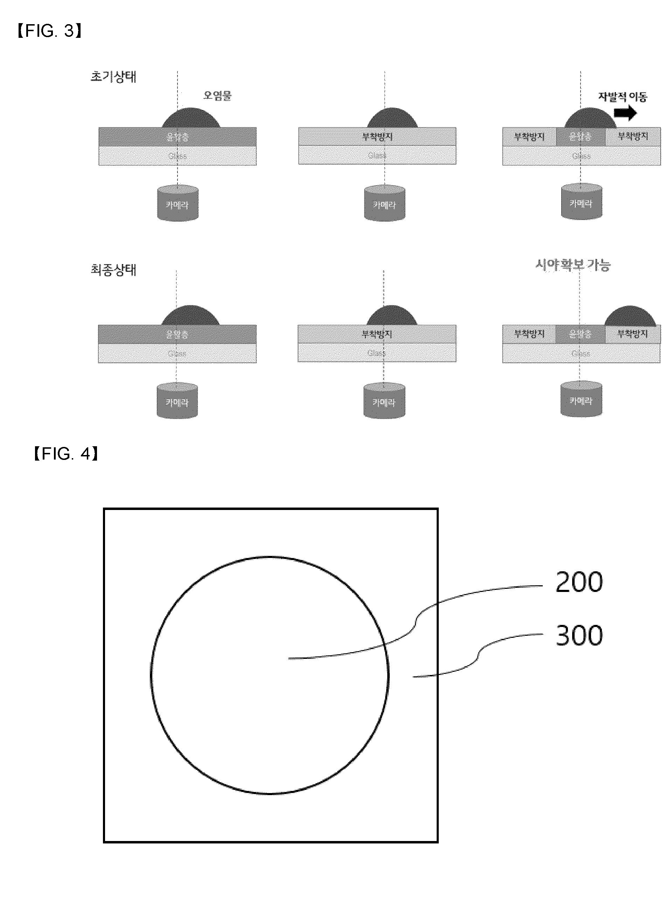

Further, FIG. 3 is a schematic diagram showing an example in which a contamination prevention effect is implemented in an article according to an embodiment of the present disclosure.

Referring to FIG. 3, when the article according to an embodiment of the present disclosure is a sensor recognized by a camera, etc., it can be confirmed that contaminants attached to the sensor move toward the anti-adhesion coating layer due to the difference in surface energy at the interfaces of the lubricating layer and the anti-adhesion coating layer. In this case, the possibility of sensor malfunction due to contaminant attachment can be reduced.

For example, the lubricating layer may be a layer that can implement the Slippery Liquid-Infused Porous Surfaces (SLIPS) effect. Herein, the SLIPS layer does not necessarily have to have a porous surface.

For example, the surface energy values of both the lubricating layer and the anti-adhesion coating layer may be about 50 mJ//m² or less. That is, it may be desirable for both the lubricating layer and the anti-adhesion coating layer to have low surface energy. More specifically, both the lubricating layer and the anti-adhesion coating layer may be hydrophobic layers. At the same time, the surface energy of the lubricating layer may be relatively lower than the surface energy of the anti-adhesion coating layer, and conversely, the surface energy of the anti-adhesion coating layer may be relatively higher than the surface energy of the lubricating layer.

Specifically, for example, the lubricating layer may have a surface energy of less than about 20 mJ/m², less than about 18 mJ/m², less than about 15 mJ/m², or less than about 12 mJ/m².

When the surface energy of the lubricating layer is out of the above range, the above-described effect of moving contaminants from the lubricating layer to the anti-adhesion coating layer may not occur.

Further, the anti-adhesion coating layer may have a surface energy of about 20 mJ/m² or more, or about 25 mJ/m² or more, and about 40 mJ/m² or less, 35 mJ/m² or less, or about 30 mJ/m² or less.

When the surface energy of the anti-adhesion coating layer is out of the above range, the above-described effect of moving contaminants from the lubricating layer to the anti-adhesion coating layer may not occur, and a problem in which contaminants do not fall off from the anti-adhesion coating layer may occur.

The surface energy can be measured by dropping a droplet of water and diiodomethane on the surface, measuring the contact angle using a contact angle meter, and then calculating it by entering the measured values into a model equation.

Specifically, the Fowkes equation or van Oss Chaudhury Good equation can generally be used to calculate the surface energy.

According to another embodiment of the present disclosure, the second region may be formed to surround the first region.

FIG. 4 is an image schematically showing the anti-contamination surface observed from above in an article provided with an anti-contamination surface according to an embodiment of the present disclosure.

Referring to FIG. 4, it can be confirmed that the second region (300) surrounds the first region (200).

In the case of FIG. 4, the first region is shown in the shape of a circle and the second region is shown in the shape of a square. As this is shown for convenience to explain the shape in which the second region surrounds the first region, and the shape of the first and second regions is not necessarily limited to a circle or a specific polygon.

Further, the anti-contamination surface may have one first region and one second region as shown in the drawings, or may have a plurality of first regions and second regions, wherein the number of first regions and the number of second regions do not necessarily have to be the same.

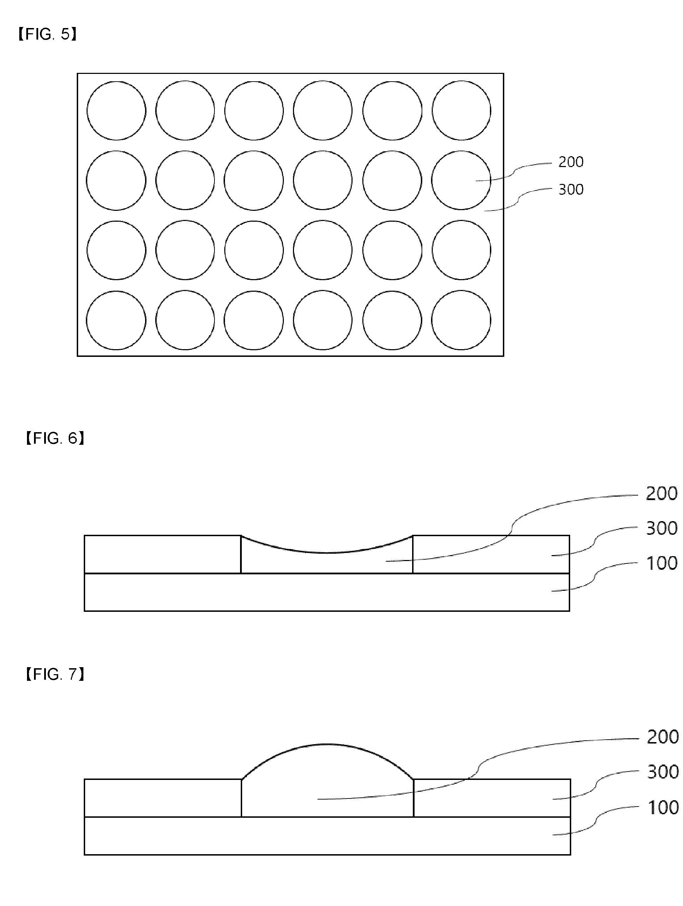

FIG. 5 is an image schematically showing the anti-contamination surface observed from above in an article provided with an anti-contamination surface according to another embodiment of the present disclosure.

According to one embodiment of the present disclosure, the average area of the first region is preferably about 5 cm² or less.

In addition, it may be desirable for the area ratio of the first region where the lubricating layer is formed to the total area of the first region and the second region to be about 20 to about 80%.

When the area of the first region is too large or the ratio of the first region is too high, that is, when the area ratio of the first region where the lubricating layer is formed to the total area is too large, a problem in which contaminants attached to the surface do not move from the first region to the second region but remain in the middle of the first region may occur. Additionally, when the area of the first region is too narrow or the ratio of the first region is too low, that is, when the area ratio of the first region where the lubricating layer is formed to the total area is too small, disadvantages in transparency and visibility may occur.

Additionally, the first region may be formed in a convex or concave shape. By forming the first region in a convex or concave shape, the above-described effect of moving contaminants attached to the surface from the first region to the second region can be further promoted.

FIGS. 6 and 7 are images schematically showing a cross-section of the anti-contamination surface in an article provided with an anti-contamination surface according to an embodiment of the present disclosure.

Referring to FIGS. 6 and 7, in an article having an anti-contamination surface according to an embodiment of the present disclosure, a substrate (100); a first region (200) formed to be concave or convex; and a second region (300) can be confirmed.

In the drawings, the first region formed to be concave or convex is shown in the form of an arc, but the present disclosure is not necessarily limited thereto. The first region may have a concave or convex cross-section in the form of various curves or polygons.

According to an embodiment of the present disclosure, the thickness of the lubricating layer may be about 0.1 to 200 µm, or about 0.1 µm or more, about 0.5 µm or more, or about 1 µm or more, and about 200 µm or less, about 150 µm or less, or about 100 µm or less.

When the thickness is too thin, problems in which durability and lubricating effect are deteriorated may occur, and when the thickness is too thick, problems such as cracks or excessive flow of lubricating fluid in the lubricating layer may occur.

In addition, the lubricating layer may include a hydrophobic inorganic cured layer, a fluorine-silane cured layer formed on the hydrophobic inorganic cured layer, and a fluorine oil layer formed on the fluorine-silane cured layer.

Herein, the fluorine-silane cured layer and the fluorine oil layer may be clearly distinguished by a boundary between the layers, or may not be divided into layers because a boundary between the layers is not clear depending on the characteristics of their constituent materials.

The hydrophobic inorganic cured layer may be formed by curing a coating solution (hereinafter, referred to as first coating solution) for forming the hydrophobic inorganic cured layer.

According to one example of the present disclosure, the hydrophobic inorganic cured layer may include a cured product of alkyl-trialkoxy silane and tetraalkoxy silane, and the first coating solution may include alkyl-trialkoxy silane and tetraalkoxy silane.

According to one embodiment of the present disclosure, the alkyl-trialkoxy silane may be a compound represented by the following Chemical Formula 1.

[Chemical Formula 1] R11-Si(R12)(R13)(R14)

In Chemical Formula 1, R11 is an alkyl group having 1 to 5 carbon atoms, and R12 to R14 are each independently an alkoxy group having 1 to 5 carbon atoms.

More specifically, R11 may be methyl, ethyl, propyl, butyl, or pentyl, and may be straight-chain or branched-chain.

R12 to R14 may each independently be methoxy, ethoxy, propoxy, butoxy, or pentoxy, and may be straight-chain or branched-chain.

Specifically, the alkyl-trialkoxy silane may be, for example, at least one selected from the group consisting of methyl-trimethoxy silane, methyl-triethoxy silane, methyl-tripropoxy silane, methyl-tributoxysilane, methyl-tripentoxysilane, ethyl-trimethoxy silane, ethyl-triethoxy silane, ethyl-tripropoxy silane, ethyl-tributoxysilane, ethyl-tripentoxysilane, propyl-trimethoxy silane, propyl-triethoxy silane, propyl-tripropoxy silane, propyl-tributoxysilane, propyl-tripentoxysilane, butyl-trimethoxy silane, butyl-triethoxy silane, butyl-tripropoxy silane, butyl-tributoxysilane, butyl-tripentoxysilane, pentyl-trimethoxy silane, pentyl-triethoxy silane, pentyl-tripropoxy silane, pentyl-tributoxysilane, and pentyl-tripentoxysilane.

The alkyl-trialkoxy silane described above is a component constituting the main network of the inorganic coating film through a sol-gel reaction in the composition. At this time, the alkyl group can increase flexibility of the network structure and relieve stress that occurs on reaction between silanols or between silanols and the surface of the substrate. When only alkyl silanes are used, the number of silanols participating in the reaction is small, which is disadvantageous in lowering the surface energy during subsequent fluorine coating, and when only alkoxy silanes are used, the above-mentioned stress relief effect cannot be obtained.

According to one embodiment of the present disclosure, the tetraalkoxy silane may be a compound represented by the following Chemical Formula 2.

[Chemical Formula 2] Si(R21)(R22)(R23)(R24)

In Chemical Formula 2, R21 to R24 are each independently an alkoxy group having 1 to 5 carbon atoms.

More specifically, R21 to R24 may each independently be methoxy, ethoxy, propoxy, butoxy, or pentoxy, and may be straight-chain or branched-chain.

Specifically, the tetraalkoxy silane may be, for example, at least one selected from the group consisting of tetramethoxy silane, tetraethoxy silane, tetrapropoxy silane, tetrabutoxy silane, and tetrapentoxy silane.

Tetraalkoxy silanes as described above can increase silanol groups that can participate in the reaction between the above-mentioned silanols or between silanols and the surface of the substrate in the composition, and this helps to realize a surface with low surface energy by increasing reactivity with fluorine silane in the subsequent process.

When tetraalkoxy silanes are used in excessive amounts, the reaction between silanols may proceed excessively, causing strong shrinkage in the entire network, which may lead to cracks or poor adhesion problems.

Therefore, when using alkyl-trialkoxy silane and tetraalkoxy silane at an appropriate ratio, the problem of cracks occurring in the entire coating layer network can be prevented and an appropriate amount of silanol reactive groups can be provided on the surface.

Additionally, an organic acid may be further used in the first coating solution.

According to one embodiment of the present disclosure, the organic acid may be a carboxylic acid having 1 to 5 carbon atoms.

Specifically, the organic acid may be, for example, at least one selected from the group consisting of formic acid, acetic acid, and propionic acid.

The above organic acid is used as a catalyst to promote hydrolysis of silane groups in the composition and can play a role in determining the overall network structure. Under acidic conditions with low pH, the hydrolysis rate is superior to the condensation reaction rate, so the bond by silane forms a linear structure. On the other hand, under basic conditions, the condensation reaction rate is faster, forming a particulate structure. Inorganic acids such as hydrochloric acid, rather than organic acids, can also be used, but organic acids can be more useful in controlling the gel time.

In addition, the first coating solution may include about 1 to 50 parts by weight of tetra alkoxy silane based on 100 parts by weight of alkyl-trialkoxy silane.

When tetra alkoxy silane is used too little, the number of silanols to react with fluorine silane is too small, making it difficult to lower the surface energy to the appropriate extent. When the tetra alkoxy silane is used too much, the stress acting on the entire coating network is increased by excessive reaction of silanols, which may cause a crack in the coating layer or a problem in which the adhesion of the coating layer is lowered.

In addition, the first coating solution may include about 1 to 10 parts by weight of an organic acid based on 100 parts by weight of alkyl-trialkoxy silane.

When the organic acid is included too little, the hydrolysis rate decreases, making it difficult to obtain a proper linear structure network, which may cause a problem in which physical properties of the coating film are lowered. When included too much, it becomes difficult to control the response due to the reduction in gel time, and there are excessive organic acids that do not participate in the network, which may cause a problem in which mechanical properties of the coating film are lowered

The pH of the first coating solution may be about 7 or less, about 5 or less, or about 3 or less, and about 1 or more, or about 2 or more.

The pH can affect the hydrolysis rate and the condensation reaction rate, and a difference in these two reaction rates determines the structure of the coating film. In addition, it affects storage stability of the prepared coating solution.

From this point of view, a stable inorganic coating film can be obtained under acidic conditions having the pH within the above range.

The first coating solution may further include an organic solvent in addition to the components described above. Such an organic solvent may specifically include alcohols or ethers, and the amount of the organic solvent may be appropriately selected in consideration of coating and drying after coating.

Further, the thickness of the hydrophobic inorganic cured layer may be about 0.05 to 20 µm, about 0.05 µm or more, or about 0.1 µm or more, and 20 µm or less, about 15 µm or less, or about 10 µm or less. When the thickness of the hydrophobic inorganic cured layer is too thin, physical properties such as coating hardness may be lowered, and when the thickness of the hydrophobic inorganic cured layer is too thick, there may be a problem of cracking or peeling in the coating layer.

In addition, the fluorine-silane cured layer may be formed by curing a coating solution (hereinafter, referred to as second coating solution) for form ing the fluorine-silane cured layer.

According to another embodiment of the present disclosure, the fluorine-silane cured layer may include a cured product of fluoropolyether silane.

According to an embodiment of the present disclosure, the fluoropolyether silane may be a compound including a moiety represented by the following Chemical Formulae 3-1 to 3-4.

[Chemical Formula 3-1] CF₃-

[Chemical Formula 3-2] -CF₂-CF₂-O-

[Chemical Formula 3-3] -CF₂-CF₂-CF₂-O-

[Chemical Formula 3-4] -Si(R31)(R32)(R33)

In Chemical Formula 3-4, R31 to R33 are each independently an alkoxy group having 1 to 5 carbon atoms.

The above-described fluoropolyether silane is a compound having fluorocarbons at one end, an alkoxy silane group at the other end, and a fluoroethoxy or fluoropropoxy group in the middle. It can form a hard coating layer by directly forming a covalent bond with the first coating layer, and can extremely lower the surface energy of the coating layer due to a lot of fluorine chains.

In the second coating solution, the fluoropolyether silane can be used with an alkoxy fluoroalkyl-based solvent.

The alkoxy fluoroalkyl-based solvent used herein may be an ether compound represented by the following Chemical Formula 4.

CF₃-(CF₂)n-O-(CH₂)m-CH₃

In the Chemical Formula, n and m may each independently be an integer of 1 to 5.

In the ether compound, an alkyl group with no fluorine substituted is connected to one side of the oxygen, and an alkyl group in which all hydrogen atoms are substituted with fluorine is connected to the other side of the oxygen.

Such ether compounds are excellent in compatibility with the fluoropolyether silane compound described above, and can uniformly disperse the fluoropolyether silane compound in the second coating solution.

Further, the fluorine oil layer may be formed by applying a coating solution (hereinafter, referred to as third coating solution) for forming the fluorine oil layer.

According to an embodiment of the present disclosure, the fluorine oil layer may include a fluorinated polyether oil.

Further, the fluorinated polyether oil may be a compound including a group represented by the following Chemical Formulae 4-1 to 4-3.

[Chemical Formula 4-1] CF₃-

[Chemical Formula 4-2] -CF₂-CF₂-O-

[Chemical Formula 4-3] -CF₂-CF₂-CF₂-O-.

The above-described polyether oil is a kind of perfluoropolyether containing CF₃ at both ends and a perfluoroalkyleneoxide repeating unit inside, and can implement contamination prevention performance by maintaining excellent bonds with the fluorine-silane cured layer, while providing lubricating effects.

When applying the third coating solution on the metal surface provided with a fluorine silane cured layer, the coating thickness may be about 0.1 to about 100 µm.

When the thickness is too thin, the lubricating effect may be lowered, and when the thickness is too thick, the lubricant may flow at the surface.

Further, the sum of the thicknesses of the fluorine-silane cured layer and the fluorine oil layer may be about 0.1 to about 200 µm, about 0.1 µm or more, about 0.5 µm or more, or about 1 µm or more, and about 200 µm or less, about 150 µm or ess, or about 100 µm or less.

When the cured thickness of the fluorine silane cured layer is too thin, the coating is not properly formed, and the fluorine content of the surface may be low, making it impossible to maintain an appropriately low surface energy. When the cured thickness of the fluorine silane cured layer is too thick, the polymer silane may clump together, which may cause problems such as an uneven coating layer and reduced economic efficiency.

Additionally, the anti-adhesion coating layer may include cured polydialkylsiloxane and a silicone oil.

In this case, the silicone oil can be confined within the polydialkylsiloxane cross-linked polymer, which can demonstrate excellent anti-adhesion performance and excellent durability of the coating layer. Further, the coating surface remains solid, is not slippery, and the silicone component is not eluted to the surface.

The anti-adhesion coating layer may be formed by a two-component coating solution including a first liquid containing polydialkylsiloxane having ethylenically unsaturated groups at both ends, an organic solvent, and a silicone oil; and a second liquid containing a cross-linking agent.

The polydialkylsiloxane may be a compound represented by the following Chemical Formula 5.

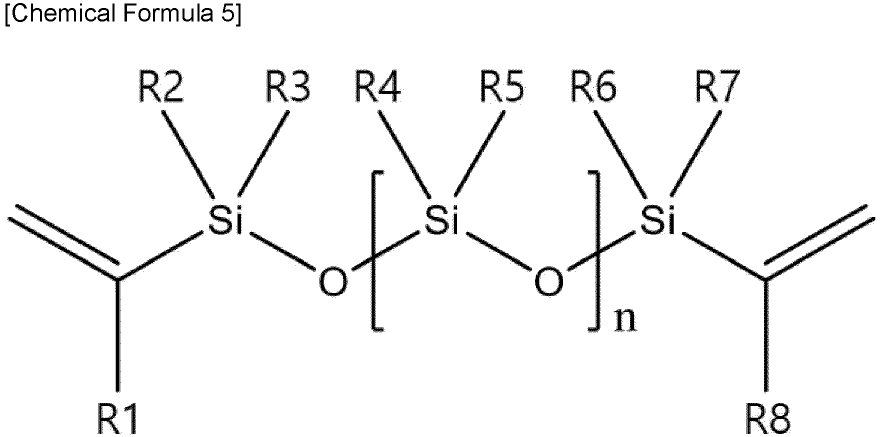

In Chemical Formula 5,
n is the number of repetitions of the siloxane repeating unit, and is an integer of 10 to 1,000,
R1 and R8 are each independently hydrogen or alkyl having 1 to 5 carbon atoms, and
R2 to R7 are each independently alkyl having 1 to 5 carbon atoms.

The n may be about 10 or more, about 30 or more, or about 50 or more, and 1000 or less, about 500 or less, about 300 or less, or about 100 or less.

The polydialkylsiloxane monomer having ethylenically unsaturated groups at both ends is a type of long-chain monomers, and can be polymerized with other monomer components.

When a coating layer is formed using such a polydialkylsiloxane monomer and a cross-linking agent and polymerization is performed, a cross-linking bond is formed by the polydialkylsiloxane monomer and the cross-linking agent, thereby forming a network structure by a chain of dialkylsiloxane units.

In particular, the polydialkylsiloxane monomer as described above has almost the same chemical properties as silicone oil to achieve anti-adhesion performance, and has excellent compatibility with the silicone oil. Accordingly, the silicone oil can be well captured in the network structure by the polydialkylsiloxane.

That is, when a coating layer is formed using the coating composition according to one aspect of the present disclosure, the silicone oil component is captured in the cross-linked network by the polydialkylsiloxane monomer and the cross-linking agent, thereby realizing an anti-adhesion effect. Further, the silicone oil may not be eluted outside the cross-linked network.

In addition, the polydialkylsiloxane monomer as described above has a very strong bonding strength after cross-linking polymerization, and can greatly improve durability of the coating layer when forming the coating layer.

Further, the number of siloxane repeating units in the polydialkylsiloxane monomer determines the length of the polydialkylsiloxane chain, and is ultimately related to the size of a void in the cross-linked network structure after cross-linking polymerization. In addition, the size of the void is directly related to whether the silicone oil is eluted out of the cross-linked network.

In this respect, n may be about 10 or more, about 30 or more, or about 50 or more, and 1000 or less, about 500 or less, about 300 or less, or about 100 or less. However, the present disclosure is not necessarily limited thereto, and the n value is more related to the molecular size of the silicone oil used together.

At this time, the weight ratio of the polydialkylsiloxane component:silicone oil is preferably about 1:5 to about 5:1, about 1:5 to about 3.5:1, or 1:3.5 to 2.5:1.

When too much silicone oil is included out of the above range, mechanical properties of the anti-adhesion coating formed by the composition may decrease, and curing for forming a coating layer may proceed slowly. Additionally, when too little silicone oil is included, the problem of deterioration in anti-adhesion performance may occur.

In addition, the organic solvent may include at least one selected from the group consisting of methyl ethyl ketone, methyl isobutyl ketone, ethyl acetate, 2-butanol, xylene, and toluene.

The solvent is used to evenly disperse the silicone oil, and the present disclosure is not necessarily limited thereto. A solvent with high solubility in silicone oil can be appropriately selected among ketones, alcohols, acetates, and aromatic compounds, and used.

According to one embodiment of the present disclosure, the silicone oil may have a viscosity of 500 cSt or less, or 1 cSt or more and less than 500 cSt. The lower limit may be about 1 cSt or more, about 5 cSt or more, or about 7 cSt or more, and the upper limit may be less than about 500 cSt, about 400 cSt or less, about 300 cSt or less, or about 150 cSt or less.

When the viscosity of the silicone oil is too low, the amount of oil required to achieve the anti-adhesion effect increases, which may reduce adhesion to the adherend and cause the coating to peel off. When the viscosity of the silicone oil is too high, the oil may be eluted out to the surface during coating, causing contamination by oil.

In addition, it may be desirable to use the silicone oil having a weight average molecular weight of about 1,000 to about 10,000, or about 1,000 to about 5,000.

When the molecular weight of the silicone oil is too low, the oil content increases to achieve an anti-adhesion effect, as in the case where the viscosity of the silicone oil is low, and this may cause problems such as coating peeling due to poor adhesion to the substrate when evaluating heat resistance. When the molecular weight of the silicone oil is too high, as in the case where the viscosity of the silicone oil is too high, the oil may be eluted to the surface during coating and cause contamination by oil.

According to an embodiment of the present disclosure, the first liquid may preferably further include a volatile branched siloxane compound.

This volatile branched siloxane can improve dispersibility of silicone oils, polydialkylsiloxanes with ethylenically unsaturated groups, and other similar compounds, thereby improving coating properties when forming a coating layer. Further, it may be volatilized and removed from the coating layer after application.

Examples of such compounds include tetra(trialkylsiloxy)silane compounds, where the alkyl group may be a straight-chain or branched-chain alkyl group having 1 to 4 carbon atoms.

More specifically, the volatile branched siloxane compound may include tetra(trimethylsiloxy)silane, tetra(triethylsiloxy)silane, tetra(tripropylsiloxy)silane, tetra(triisopropylsiloxy)silane, tetra(tributylsiloxy)silane, tetra(triisobutylsiloxy)silane, and the like.

Additionally, the cross-linking agent may include a siloxane compound containing three or more ethylenically unsaturated groups.

Specifically, the cross-linking agent may be cyclic siloxane in which siloxane repeating units are connected as follows.

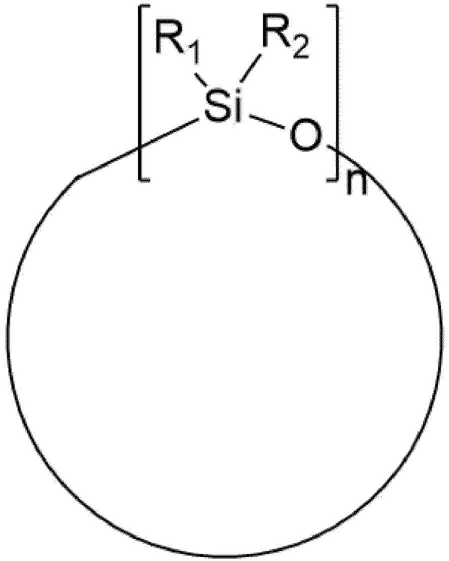

In the above Chemical Formula, n may be 3 or more and 10 or less, or 3 to 7 or less, and

R₁ and R₂ are each independently alkyl having 1 to 5 carbon atoms, or alkene group having 2 to 5 carbon atoms containing an ethylenically unsaturated group, and at least one of R₁ and R₂ is alkene group having 2 to 5 carbon atoms containing an ethylenically unsaturated group.

In the coating composition according to an embodiment of the present disclosure, polydialkylsiloxane having ethylenically unsaturated groups at both ends may be polymerized around the cross-linking agent to form a net-shaped cross-linked network.

According to another embodiment of the present disclosure, the first liquid and the second liquid may each independently further include silica surface-modified by an ethylenically unsaturated group.

Specifically, the silica compound surface-modified by an ethylenically unsaturated group may be in the form in which the ethylenically unsaturated group such as a vinyl group, an alkylated vinyl group having 1 to 5 carbon atoms, or a dialkylated vinyl group having 1 to 5 carbon atoms is linked at the end of the silanol group on the surface of the silica group.

In the silica compound surface-modified by an ethylenically unsaturated group, the ethylenically unsaturated group is linked to the above-mentioned cross-linking agent and/or polydialkylsiloxane compound having ethylenically unsaturated groups at both ends during polymerization. Accordingly, it can also play a role in forming a net-shaped cross-linked network and, in particular, can improve mechanical properties and dimensional stability of the coating layer formed by polymerization.

Meanwhile, there is provided a method for forming an anti-contamination surface, including the steps of: forming a first region including a hydrophobic inorganic cured layer on a portion of a surface of a substrate; forming a second region including an anti-adhesion coating layer on at least a portion of the surface of the substrate other than the first region; and forming a lubricating layer in the first region.

For details on the coating solution required to form each layer, refer to the above.

When applying the coating solution, the application method is not particularly limited, and methods commonly used in the technical field to which the present invention pertains may be selected, such as applying directly with a tool such as a brush, spraying after appropriately adjusting the viscosity, or coating using a bar.

After application, drying can be performed at room temperature for about 10 minutes to about 1 hour. These drying conditions may vary depending on the type and amount of solvent used together.

After drying, curing may be performed for about 30 minutes to about 2 hours at a temperature of about 100 to about 150 °C.

### [ADVANTAGEOUS EFFECTS]

According to an embodiment of the present disclosure, it is possible to effectively prevent contaminants from attaching to the surface of an article.

### [BRIEF DESCRIPTION OF THE DRAWINGS]

FIG. 1 is an image schematically showing a cross-section of an anti-contamination surface in an article provided with an anti-contamination surface according to an embodiment of the present disclosure.
FIG. 2 is a diagram schematically showing the effect achieved by an embodiment of the present disclosure.
FIG. 3 is a schematic diagram showing how the contamination prevention effect is implemented in an article according to an embodiment of the present disclosure.
FIG. 4 is an image schematically showing an anti-contamination surface observed from above in an article provided with an anti-contamination surface according to an embodiment of the present disclosure.
FIG. 5 is an image schematically showing an anti-contamination surface observed from above in an article provided with an anti-contamination surface according to another embodiment of the present disclosure.
FIGS. 6 and 7 are images schematically showing a cross-section of an anti-contamination surface in an article provided with an anti-contamination surface according to an embodiment of the present disclosure.
FIG. 8 is a diagram briefly showing a process for manufacturing an article provided with an anti-contamination surface according to an embodiment of the present disclosure.
FIG. 9 is a photograph showing the evaluation of anti-contamination performance of an anti-contamination article according to an embodiment of the present disclosure.

### [DETAILED DESCRIPTION OF THE EMBODIMENTS]

Hereinafter, the function and effect of the present invention will be described in more detail through specific examples. However, these examples are for illustrative purposes only, and the invention is not intended to be limited by these examples.

The lubricating layer was composed of a hydrophobic inorganic cured layer, a fluorine-silane cured layer formed on the hydrophobic inorganic cured layer, and a fluorine oil layer formed on the fluorine-silane cured layer.

A coating solution for forming a hydrophobic inorganic cured layer (hereinafter, referred to as coating solution 1-1) was prepared as follows.
5 parts by weight of methyl-trimethoxy silane as the alkyl-trialkoxy silane component, 1 part by weight of tetraethoxy silane as the tetraalkoxy silane component, and 4 parts by weight of 6 wt% acetic acid diluted in water as the organic acid component were mixed (pH: about 2.3).

The coating solution 1-1 was prepared by diluting 100 parts by weight of the above coating solution with about 50 parts by weight of isopropyl alcohol as a solvent.

A coating solution for forming a fluorine-silane cured layer (hereinafter, referred to as coating solution 1-2) was prepared as follows.

As a fluoropolyether silane component, Optool-DSX, a perfluoropolyether-silane manufactured by Daikin, was used by dissolving it in a solvent, Novec-7200 manufactured by 3M, at a concentration of 1 wt%.

A coating solution for forming a fluorine oil layer (hereinafter, referred to as coating solution 1-3) was prepared as follows.

As a fluorinated polyether oil component, DEMNUM-S65, a perfluoropolyether manufactured by Daikin, was used by dissolving it in a solvent, Novec-7200 manufactured by 3M, at a concentration of 1 wt% (surface energy after drying: 18 mN/m²; based on manufacturer's TDS data).

A coating solution for forming an anti-adhesion coating layer (hereinafter, referred to as second coating solution) was prepared by using 2 parts by weight of Sylgard (R)184 silicone elastomer kit, base resin manufactured by Dow and 0.2 parts by weight of a cross-linking agent as polydialkylsiloxane having ethylenically unsaturated groups at both ends and cross-linking agent, preparing 3.3 parts by weight of polydimethylsiloxane-based silicone oil with a viscosity measured at 25 °C of 10 cSt (Kinematic viscosity, surface energy of 21 mN/m, based on manufacturer's TDS data) manufactured by Gelest as a silicone oil, and using 3 parts by weight of methyl ethyl ketone as a solvent, followed by mixing.

### Example 1

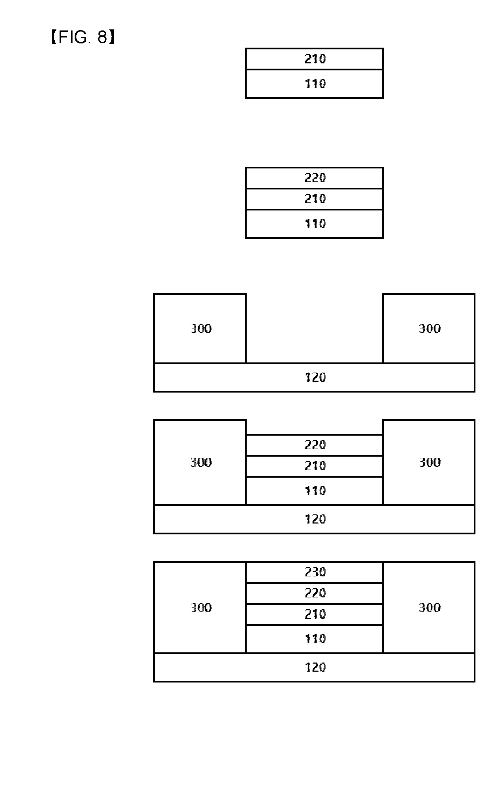

To manufacture an article with an anti-contamination surface, the process shown in FIG. 8 was followed.

FIG. 8 is a diagram briefly showing a process for manufacturing an article provided with an anti-contamination surface according to an embodiment of the present disclosure.

As a substrate for forming a lubricating layer (hereinafter, referred to as first substrate 110), a slide glass with 1 by 1 cm and 1 mm thick was prepared. The coating solution 1-1 was applied to the surface of the first substrate using a brush, dried at room temperature for about 30 minutes, and then cured for about 1 hour at a temperature of about 130 °C to form a hydrophobic inorganic cured layer (210) with a thickness of about 5 µm.

The coating solution 1-2 was applied thereto using a brush, dried at room temperature for about 30 minutes, and then cured for about 1 hour at a temperature of about 130 °C to form a fluorine-silane cured layer (220) with a thickness of about 50 nm.

Separately, as a substrate for forming an anti-adhesion coating layer (hereinafter, referred to as second substrate 120), a slide glass with 3 by 3 cm and 1 mm thick was prepared. Then, the second coating solution was applied to the surface of the second substrate using a roller (about 1 mm based on dry thickness).

Before the second coating solution applied to the surface of the second substrate was completely cured, the first substrate was positioned so that the second coating solution surround the first substrate on which the fluorine-silane cured layer was formed at the center. Then, the article was cured at room temperature for about 6 hours to prepare a specimen having an anti-adhesion coating layer (300) with a dry thickness of about 1 mm (surface energy of anti-adhesion coating layer: 23 mJ/m²).

The coating solution 1-3 was applied to a thickness of about 10 µm using a brush on the fluorine-silane cured layer (220) of the first substrate surrounded by the anti-adhesion coating layer of the second substrate to form a fluorine oil layer (230).

### Example 2

The procedure was carried out in the same manner as in Example 1, except that the lubricating layer was formed to have a convex shape by using a convex lens with a diameter of 2 cm as the first substrate and a concave lens with a diameter of 3.5 cm as the second substrate.

### Example 3

The coating solution for forming the fluorine oil layer (coating solution 1-3) was prepared as follows.

As the fluorinated polyether oil component, DEMNUM-S200, a perfluoropolyether manufactured by Daikin, was used by dissolving it in a solvent, Novec-7200 manufactured by 3M, at a concentration of 1 wt% (surface energy after curing: 19 mN/m²; based on manufacturer's TDS data).

Other than that, the procedure was the same as in Example 1.

### Example 4

The procedure was carried out in the same manner as in Example 1, except that a Teflon sheet used for antistatic purposes (manufacturer: ALPHAFLON, product name: AG018AD.AS, thickness: 0.18 mm, surface energy: 19 mN/m²) was attached to the substrate to form a lubricating layer instead of using the coating solutions 1-1 and 1-2.

### Comparative Example 1

Only the lubricating layer was formed in the center of the substrate surface (No anti-adhesion coating layer).

As a substrate for forming a lubricating layer, a slide glass with 3 by 3 cm and 1 mm thick was prepared. The coating solution 1-1 was applied to the surface of the first substrate using a brush, dried at room temperature for about 30 minutes, and then cured for about 1 hour at a temperature of about 130 °C to form a hydrophobic inorganic cured layer with a thickness of about 5 µm.

The coating solution 1-2 was applied thereto using a brush, dried at room temperature for about 30 minutes, and then cured for about 1 hour at a temperature of about 130 °C to form a fluorine-silane cured layer with a thickness of about 50 nm.

The coating solution 1-3 was applied to the fluorine-silane cured layer (220) at a thickness of about 10 µm using a brush to form a fluorine oil layer.

### Comparative Example 2

Only the anti-adhesion coating layer was formed in the center of the substrate surface.

As a substrate, a slide glass with 3 by 3 cm and 1 mm thick was prepared.

The second coating solution was applied to the center of the substrate with a size of 1 cm x 1 cm using a brush, and cured at room temperature for about 6 hours to prepare a specimen having a coating layer with a dry thickness of about 1 mm.

For reference, Comparative Examples 1 and 2 can both be considered as examples in which a hydrophobic surface was formed on a slide glass with a hydrophilic surface.

### Comparative Example 3

The procedure was carried out in the same manner as in Example 1, except that the process for forming the hydrophobic inorganic cured layer (210) and the fluorine-silane cured layer (220) is omitted, and only a fluorine oil layer (230) was formed by applying the coating solution 1-3 on the first substrate surrounded by the anti-adhesion coating layer of the second substrate at a thickness of about 10 µm using a brush.

### Evaluation of anti-contamination performance

As contaminants for evaluation, a saturated aqueous solution of potassium chloride (KCl), a hydrophilic material, and instant adhesive (Loctite 495), a hydrophobic material, were prepared.

100 µl of each contaminant was dropped on the lubricating layer interface of Examples and Comparative Examples, and whether spontaneous movement of contaminants from the lubricating layer to the anti-adhesion coating layer occurred and whether contaminants fell off from the anti-adhesion coating layer were evaluated as O and X, respectively.

The results of each evaluation are summarized in the table below.

**[Table 1]**

| | Saturated aqueous solution of potassium chloride (KCl) | | Instant adhesive | |
|---|---|---|---|---|
| | Movement | Fall-off | Movement | Fall-off |
| Example 1 | O | O | O | O |
| Example 2 | O | O | O | O |
| Example 3 | O | O | O | O |
| Example 4 | O | O | O | O |
| Comparative Example 1 | O | X | O | X |
| Comparative Example 2 | O | X | O | X |
| Comparative Example 3 | X | X | X | X |

In the anti-contamination article according to an embodiment of the present disclosure, even if contaminants were attached, the contaminants moved from the lubricating layer to the anti-adhesion coating layer at the interfaces of the lubricating layer and the anti-adhesion coating layer, and then fell off from the anti-adhesion coating layer. As a result, it was confirmed that the anti-contamination performance was very excellent.

However, if only a lubricating layer was formed (Comparative Example 1), only an anti-adhesion coating layer was formed (Comparative Example 2), or the lubricating layer was not properly formed even with a structure similar to the present disclosure, it was confirmed that the spontaneous movement or fall-off of contaminants was not properly implemented, resulting in insufficient anti-contamination performance.

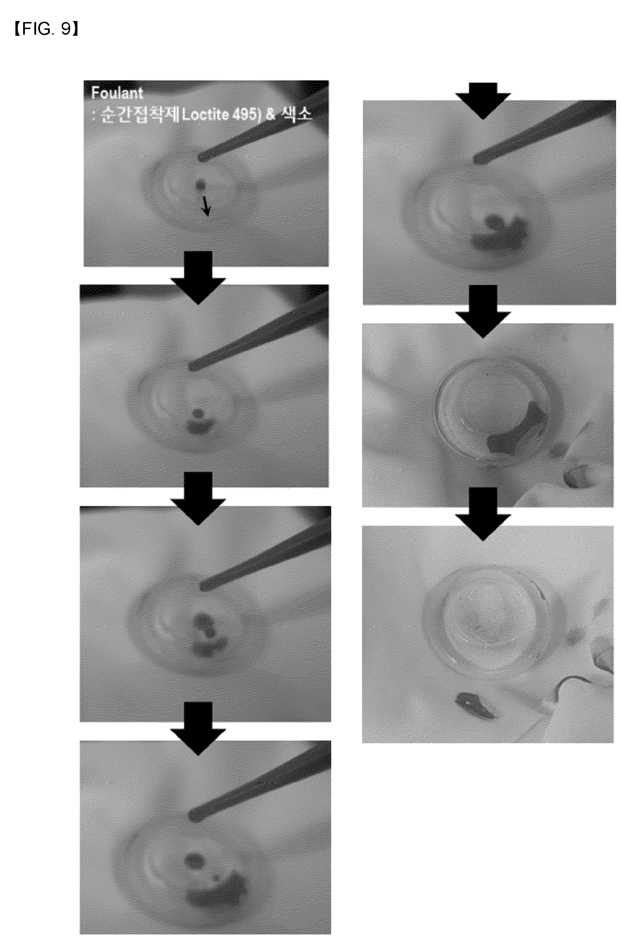

FIG. 9 is a photograph showing the evaluation of anti-contamination performance of an anti-contamination article according to an embodiment of the present disclosure.

Referring to FIG. 9, it can be seen that contaminants move from the lubricating layer to the anti-adhesion coating layer at the interfaces of the lubricating layer and the anti-adhesion coating layer, and then fall off from the anti-adhesion coating layer.

## Claims

1. An article having an anti-contamination surface, comprising
a substrate;
a first region present on a portion of a surface of the substrate and having a lubricating layer formed thereon; and
a second region present on at least a portion of a surface of the substrate other than the first region and having an anti-adhesion coating layer formed thereon.

2. The article having an anti-contamination surface of Claim 1,
wherein a surface energy of the second region is greater than a surface energy of the first region.

3. The article having an anti-contamination surface of Claim 1,
wherein the lubricating layer has a surface energy of less than 20 mJ/m².

4. The article having an anti-contamination surface of Claim 1,
wherein the anti-adhesion coating layer has a surface energy of 20 mJ/m² or more.

5. The article having an anti-contamination surface of Claim 1,
wherein the anti-adhesion coating layer has a surface energy of 40 mJ/m² or less.

6. The article having an anti-contamination surface of Claim 1,
wherein the second region is formed to surround the first region.

7. The article having an anti-contamination surface of Claim 1,
wherein the first region is formed in a convex or concave shape.

8. The article having an anti-contamination surface of Claim 1,
wherein the lubricating layer has a thickness of 0.1 to 200 µm.

9. The article having an anti-contamination surface of Claim 1,
wherein the lubricating layer comprises a hydrophobic inorganic cured layer, a fluorine-silane cured layer formed on the hydrophobic inorganic cured layer, and a fluorine oil layer formed on the fluorine-silane cured layer.

10. The article having an anti-contamination surface of Claim 9,
wherein the hydrophobic inorganic cured layer comprises a cured product of alkyl-trialkoxy silane and tetraalkoxy silane.

11. The article having an anti-contamination surface of Claim 9,
wherein the hydrophobic inorganic cured layer has a thickness of 0.05 to 20 µm.

12. The article having an anti-contamination surface of Claim 9,
wherein the fluorine-silane cured layer comprises a cured product of fluoropolyether silane.

13. The article having an anti-contamination surface of Claim 9,
wherein the fluorine oil layer comprises a fluorinated polyether oil.

14. The article having an anti-contamination surface of Claim 9,
wherein a sum of the thicknesses of the fluorine-silane cured layer and the fluorine oil layer is 0.1 to 200 µm.

15. The article having an anti-contamination surface of Claim 1,
wherein the anti-adhesion coating layer comprises cured polydialkylsiloxane and a silicone oil.

16. The article having an anti-contamination surface of Claim 15,
wherein the silicone oil has a viscosity of 1000 cSt or less.

17. A method for forming an anti-contamination surface, comprising the steps of:
forming a first region comprising a hydrophobic inorganic cured layer on a portion of a surface of a substrate;
forming a second region comprising an anti-adhesion coating layer on at least a portion of the surface of the substrate other than the first region; and
forming a lubricating layer in the first region.
